# FASCICULE DE BREVET EUROPEEN

(11) **EP 0 863 059 B1**
(45) Date de publication et mention de la délivrance du brevet: **08.01.2003**
(21) Numéro de dépôt: 98110260.1
(22) Date de dépôt: 27.06.1995
(51) Int. Cl.: B60S 1/52

(54) **Bras d'essuie-glace comportant un dispositif d'aspersion de la vitre à essuyer**
Scheibenwischerarm mit Spritzvorrichtung für die zu wischenden Scheibe
Windscreen wiper arm having a spray device for the wiped surface

(30) Priorité: 30.06.1994 FR 9408034
(43) Date de publication de la demande: 09.09.1998
(62) Demande divisionnaire de: 95109980.3
(73) Titulaire: VALEO SYSTEMES D'ESSUYAGE, 78321 La Verrière (FR)
(72) Inventeur: Boissac, Jean-Paul, 86100 Chatellerault (FR); Dimur, Didier, Bloomfield Hills, Michigan 48301 (US)
(74) Mandataire: Kohn, Philippe

(56) Documents cités:
- WO-A-92/21535
- WO-A-92/21537
- DE-A- 2 942 086
- DE-U- 8 529 107
- FR-A- 1 295 138
- FR-A- 2 119 130

## Description

La présente invention concerne la conception d'un élément d'essuie-glace, et notamment d'un bras d'essuie-glace.

L'invention concerne plus particulièrement un élément d'essuie-glace de forme générale allongée auquel est associé un dispositif de lave-glace comportant un tuyau d'alimentation en liquide de lavage porté par l'élément d'essuie-glace et qui se termine par un organe d'aspersion de la vitre à essuyer.

Le document FR-A-1.295.138 décrit et représente un tel agencement dans lequel l'élément d'essuie-glace présente, en section transversale, une forme générale de U renversé qui délimite un logement longitudinal ouvert dans la face inférieure du bras d'essuie-glace tournée vers la vitre à essuyer et qui reçoit un tuyau souple d'alimentation dans lequel circule le liquide de lavage et qui est prévu pour alimenter au moins un dispositif d'aspersion de la vitre disposé par exemple au voisinage d'une extrémité libre du bras d'essuie-glace.

Dans ce document, la portion d'extrémité libre du corps de l'élément d'essuie-glace porte une tête d'aspersion rapportée.

Le document DE-U-85.29.107.2 décrit et représente un bras d'essuie-glace de forme générale allongée dont la portion d'extrémité libre du corps porte une tête d'aspersion rapportée qui est emboîtée élastiquement sur le corps.

Le document WO-A-92/21537 propose un dispositif dans lequel le revêtement 20 comporte des moyens qui permettent de maintenir les portions d'un conduit d'arrosage.

La présente invention a pour but de proposer un élément d'essuie-glace du type de celui décrit et représenté dans le document DE-U-85.29.107.2 qui soit d'une conception simple à mettre en oeuvre pour l'assemblage de tous les composants du dispositif d'aspersion sur l'élément d'essuie-glace, et notamment de la buse et du tuyau d'alimentation.

A cet effet, l'invention propose un balai d'essuie-glace, caractérisé en ce que le corps délimite un logement longitudinal qui reçoit un tuyau d'alimentation.

Divers modes de réalisation de l'invention sont précisés dans les revendications 2 à 9.

D'autres dispositions et avantages de l'invention apparaîtront à la lecture de la description détaillée qui va suivre pour la compréhension de laquelle on se reportera aux dessins annexés dans lesquels :
- la figure 1 est une vue de dessous d'un bras d'essuie-glace réalisé conformément aux enseignements de l'invention équipée d'un dispositif d'aspersion comportant une tête double d'aspersion ;
- la figure 2 est une vue en section partielle selon la ligne 2-2 de la figure 1 ;
- la figure 3 est une vue en section partielle selon la ligne 2-2 de la figure 1 de la portion d'extrémité libre du bras d'essuie-glace représentée à plus grande échelle ; et
- les figures 4 et 5 sont des vues similaires à celles de la figure 3 qui illustrent des variantes de réalisation et d'agencement du dispositif d'aspersion.

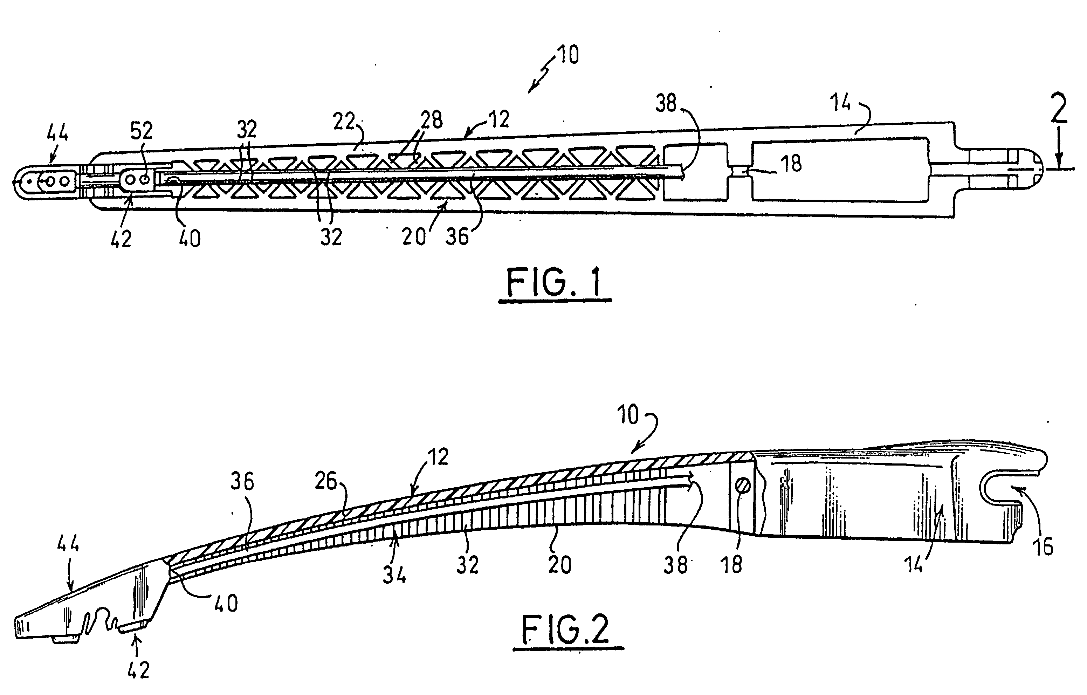

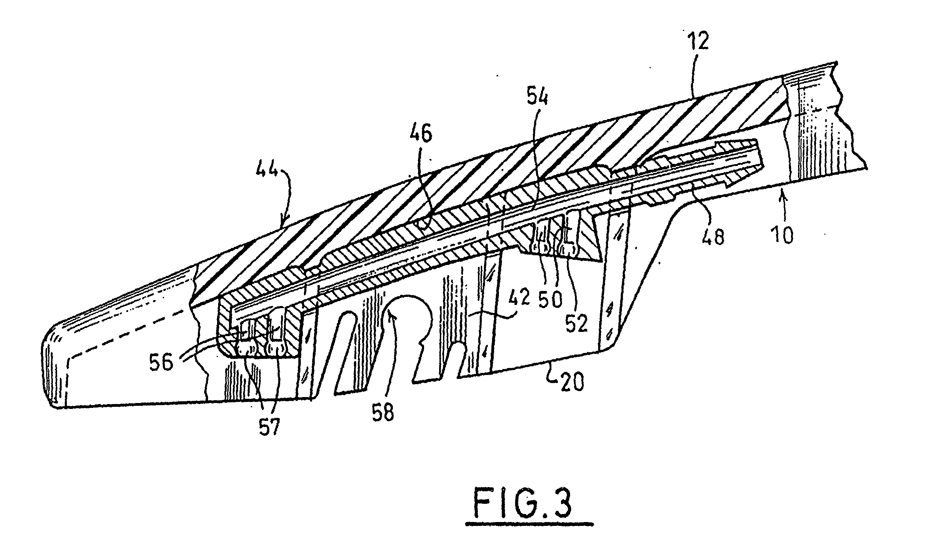

Le bras d'essuie-glace 10 qui est illustré aux figures 1 et 2 est une pièce de forme générale allongée constituée par un corps 12 moulé en matière plastique en une seule pièce.

Le tronçon d'extrémité 14 du corps 12 comporte des moyens 16 pour assurer le montage, avec articulation, du bras d'essuie-glace sur des moyens d'entraînement en rotation alternée de l'essuie-glace (non représentés) ainsi qu'une tige transversale 18 pour l'accrochage d'un ressort de pression d'essuyage (non représenté).

Le corps 12 du bras d'essuie-glace 10 est une pièce moulée qui présente, en section transversale, une forme générale de U renversé délimitée par deux joues latérales parallèles 22 et 24 reliées entre elles par un dos supérieur 26, le corps 12 présente ainsi un logement longitudinal 30 ouvert dans la face inférieure 20 prévue pour être tournée vers la vitre à essuyer (non représentée) .

L'intérieur du corps 12 du bras d'essuie-glace 10 est renforcé par une série de cloisons transversales inclinées 28 formant des croisillons qui s'étendent depuis le dos supérieur 26 jusqu'à la face inférieure 20.

Selon un mode de réalisation de l'invention, le corps 12 comporte une rainure 34 longitudinale centrale qui est délimitée transversalement par les bords verticaux en vis-à-vis 32 des cloisons 12.

La rainure 34 s'étend longitudinalement tout le long du corps 12 et sa largeur transversale est légèrement inférieure au diamètre d'un tuyau d'alimentation 36 qui appartient à un dispositif de lavage de la vitre à essuyer.

Le tuyau d'alimentation 36 peut être un tuyau souple ou semi-rigide qui, dans le mode de réalisation illustré sur les figures, est emboîté dans la rainure ouverte 34 depuis la face inférieure 20 à l'intérieur 12 du bras d'essuie-glace 10.

Sur les figures, on a interrompu volontairement le tuyau d'alimentation 36 au niveau de l'une de ses extrémités 38 qui est prévue pour être reliée à des moyens (non représentés) d'alimentation en liquide de lavage du dispositif de lavage.

L'autre extrémité longitudinale libre 40 du tuyau d'alimentation 36 est prévue pour être reliée à une tête 42 d'aspersion de la vitre à essuyer.

Comme on peut le voir sur la figure 3, la portion d'extrémité libre 44 du corps 12 du bras d'essuie-glace 10 comporte une cavité 46 qui est ouverte dans la face inférieure 20 et qui reçoit la tête d'aspersion 42.

Dans le mode de réalisation illustré aux figures 1 à 3, la tête d'aspersion 42 est un organe rapporté qui est emboîté élastiquement dans la cavité 46 et qui comporte un raccord 48 prévu pour recevoir l'extrémité libre 40 du tuyau d'alimentation 36.

La tête d'aspersion 42 comporte une première chambre double d'aspersion 50 qui se termine par deux orifices d'aspersion 52 orientés en direction de la vitre à essuyer.

La chambre double d'aspersion 50 est reliée au raccord 48 par un conduit longitudinal 54 qui se prolonge longitudinalement en direction d'une seconde chambre double d'aspersion 56 agencée à l'extrémité libre de la tête d'aspersion 42 et qui se termine par deux orifices 57.

Le conduit 54 qui relie les deux chambres d'alimentation doubles 52 et 56 s'étend au-dessus d'une partie intermédiaire de la portion d'extrémité libre 44 du corps 12 de l'essuie-glace 10 qui comporte des moyens, réalisés venus de matière par moulage, 58 pour l'accrochage d'un balai d'essuie-glace sur le bras d'essuie-glace 12.

Comme on peut le voir sur les figures 1 à 3, tous les logements, rainures, cavités, etc. du corps 12 du bras d'essuie-glace 10 sont ouverts en direction de sa face inférieure 20 ce qui en facilite grandement les opérations de moulage au moyen d'un moule comportant un ensemble de noyaux qui s'étendent tous selon la même direction.

Après avoir réalisé le moulage du corps 12 avec ses cavités et logements, l'assemblage des composants du dispositif de lavage est particulièrement simple dans la mesure où il consiste à emboîter élastiquement le tuyau souple d'alimentation 36 dans la rainure 34 ainsi que la tête d'aspersion 42 dans le logement 46.

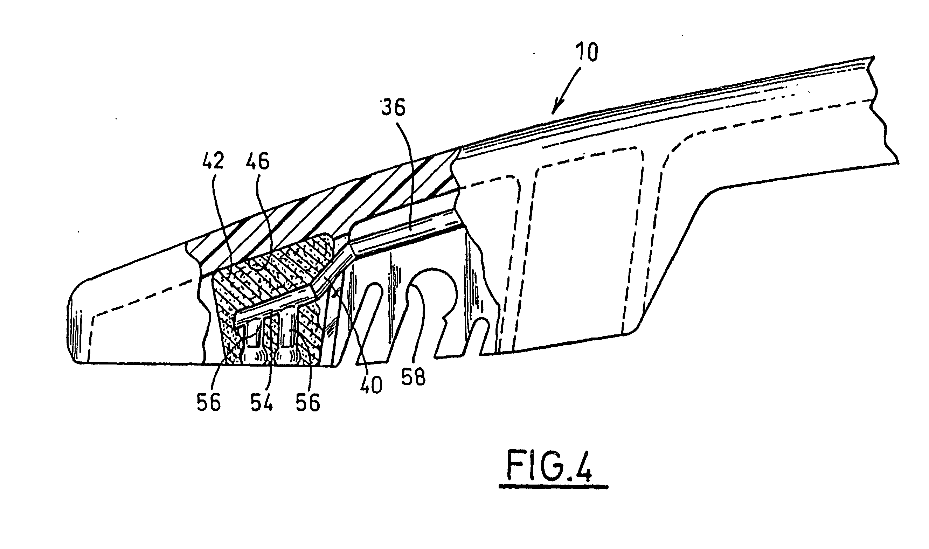

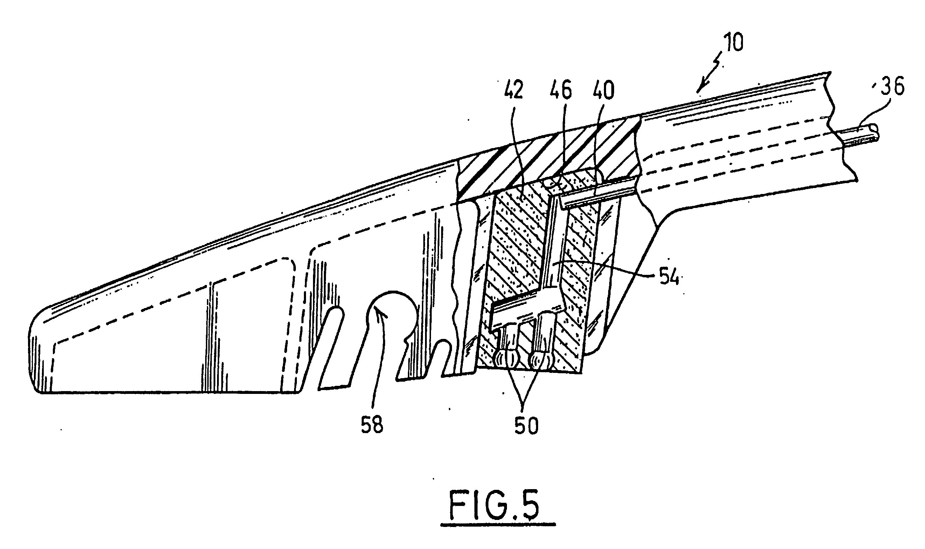

Dans la variante de réalisation illustrée aux figures 4 et 5, le dispositif d'aspersion comporte une seule chambre d'aspersion double avec son conduit de raccordement 54 qui est réalisé par moulage dans un élément rapporté 42 qui est disposé dans la cavité 46, vers l'arrière du bras d'essuie-glace 10 par rapport au moyen d'accrochage 58 (figure 5) ou vers l'avant (figure 4).

On voit ainsi que la réalisation d'un seul corps moulé en matière plastique 12 permet de réaliser toute une gamme de dispositifs de lavage selon le type des dispositifs d'aspersion 42, simple ou multiple, qui sont agencés dans la cavité 46.

La tête d'aspersion 42 réalisée sous la forme d'un élément moulé peut également être surmoulée sur l'extrémité libre 40 du tuyau d'alimentation 36, l'ensemble étant ensuite mis en place sous la forme d'une seule pièce par emboîtement dans la rainure 34 et la cavité 46.

## Revendications

1. Bras d'essuie-glace de forme générale allongée dont la portion d'extrémité libre (44) du corps (12) porte une tête d'aspersion (42) rapportée qui est emboîtée élastiquement sur le corps, **caractérisé en ce que** le corps délimite un logement longitudinal qui reçoit un tuyau d'alimentation (36).

2. Bras d'essuie-glace selon la revendication précédente, **caractérisé en ce que** le logement présente un profil en forme de rainure (34) complémentaire du tuyau d'alimentation (36).

3. Bras d'essuie-glace selon l'une quelconque des revendications précédentes, **caractérisé en ce que** la tête d'aspersion est surmoulée sur le tuyau d'alimentation (36).

4. Bras d'essuie-glace selon l'une quelconque des revendications précédentes, **caractérisé en ce que** l'ensemble formé par la tête d'aspersion (42) et le tuyau d'alimentation (36) est mis en place sur le corps (12) par emboîtement.

5. Bras d'essuie-glace selon l'une quelconque des revendications précédentes, **caractérisé en ce que** le corps (12) comporte une cavité (46) qui reçoit la tête d'aspersion.

6. Bras d'essuie-glace selon la revendication 5, **caractérisé en ce que** la cavité (46) est ouverte dans la face du corps (12) tournée vers la vitre à essuyer.

7. Bras d'essuie-glace selon l'une quelconques des revendications précédentes, **caractérisé en ce que** le corps (12) est réalisé par moulage.

8. Bras d'essuie-glace selon l'une des revendications précédentes, **caractérisé en ce que** la portion d'extrémité libre (44) présente une partie intermédiaire comportant des moyens pour accrochage d'un balai d'essuie-glace.

9. Bras d'essuie-glace selon la revendication 8, **caractérisé en ce que** la tête d'aspersion (42) comporte deux chambres d'aspersion (52, 56) reliées par un conduit (54) et **en ce que** le conduit s'étend au-dessus de ladite partie intermédiaire.

## Claims

1. Wiper arm of general elongate shape, where the free end portion (44) of the body (12) carries an attached spray head (42) which is fitted elastically on the body, **characterised in that** the body delimits a longitudinal housing which receives a supply tube (36).

2. Wiper arm according to the preceding claim, **characterised in that** the housing has a profile in the form of a groove (34) complementary to the supply tube (36).

3. Wiper arm according to any one of the preceding claims, **characterised in that** the spray head is moulded onto the supply tube (36).

4. Wiper arm according to any one of the preceding claims, **characterised in that** the assembly formed by the spray head (42) and the supply tube (36) is fitted on the body (12) by nesting.

5. Wiper arm according to any one of the preceding claims, **characterised in that** the body (12) has a cavity (46) which receives the spray head.

6. Wiper arm according to Claim 5, **characterised in that** the cavity (46) is open in the face of the body (12) turned towards the pane to be wiped.

7. wiper arm according to any one of the preceding claims, **characterised in that** the body (12) is produced by moulding.

8. Wiper arm according to one of the preceding claims, **characterised in that** the free end portion (44) has an intermediate part having means for attaching a wiper blade.

9. Wiper arm according to Claim 8, **characterised in that** the spray head (42) has two spray chambers (52, 56) connected by a conduit (54) and **in that** the conduit extends above the said intermediate part.

## Patentansprüche

1. Scheibenwischerarm mit langgestreckter Gesamtform, dessen freier Endabschnitt (44) des Körpers (12) einen angefügten Spritzkopf (42) trägt, der elastisch am Körper eingepaßt ist, **dadurch gekennzeichnet, daß** der Körper eine Längsaufnahme begrenzt, die ein Zuleitungsrohr (36) aufnimmt.

2. Scheibenwischerarm nach dem vorangehenden Anspruch, **dadurch gekennzeichnet, daß** die Aufnahme ein Profil in Form einer mit dem Zuleitungsrohr (36) formschlüssigen Nut (34) aufweist.

3. Scheibenwischerarm nach einem der vorangehenden Ansprüche, **dadurch gekennzeichnet, daß** der Spritzkopf am Zuleitungsrohr (36) aufgeformt ist.

4. Scheibenwischerarm nach einem der vorangehenden Ansprüche, **dadurch gekennzeichnet, daß** die durch den Spritzkopf (42) und das Zuleitungsrohr (36) gebildete Baueinheit durch Einpassung am Körper (12) eingesetzt wird.

5. Scheibenwischerarm nach einem der vorangehenden Ansprüche, **dadurch gekennzeichnet, daß** der Körper (12) eine Ausnehmung (46) umfaßt, die den Spritzkopf aufnimmt.

6. Scheibenwischerarm nach Anspruch 5, **dadurch gekennzeichnet, daß** die Austiefung (46) in der zu der zu wischenden Scheibe gerichteten Fläche des Körpers (12) offen ist.

7. Scheibenwischerarm nach einem der vorangehenden Ansprüche, **dadurch gekennzeichnet, daß** der Körper (12) als Formteil ausgeführt ist.

8. Scheibenwischerarm nach einem der vorangehenden Ansprüche, **dadurch gekennzeichnet, daß** der freie Endabschnitt (44) einen Zwischenteil aufweist, der Mittel zum Einsetzen eines Scheibenwischerblatts umfaßt.

9. Scheibenwischerarm nach Anspruch 8, **dadurch gekennzeichnet, daß** der Spritzkopf (42) zwei durch einen Kanal (54) verbundene Spritzkammern (52, 56) umfaßt und daß sich der Kanal oberhalb des besagten Zwischenteils erstreckt.
